# EUROPEAN PATENT SPECIFICATION

(11) **EP 1 696 723 B1**
(45) Date of publication and mention of the grant of the patent: **02.04.2008**
(21) Application number: 04808870.2
(22) Date of filing: 07.12.2004
(51) Int. Cl.: A01K 73/04

(54) **TRAWL DRIVING AND ADJUSTMENT DEVICE, METHOD AND SYSTEMS**
SCHLEPPNETZANTRIEBS- UND EINSTELLVORRICHTUNG, VERFAHREN UND SYSTEME
DISPOSITIF DE HALAGE ET D'EQUILIBRAGE DE CHALUTS, PROCEDE ET SYSTEMES ASSOCIES

(30) Priority: 09.12.2003 NO 20035477
(43) Date of publication of application: 06.09.2006
(73) Proprietor: Skjold-Larsen, Henning, 3120 Tönsberg (NO)
(72) Inventor: Skjold-Larsen, Henning, 3120 Tönsberg (NO)
(74) Representative: HOFFMANN EITLE
(86) International application number: PCT/NO2004/000376
(87) International publication number: WO 2005/055708

(56) References cited:
- EP-A- 0 168 959
- WO-A-98/25162
- WO-A-20/04086092
- US-A- 3 201 889
- US-A- 4 574 723

## Description

The present invention relates to devices for dynamic orientation of at least one basic body and/or a trawl bag during a trawl operation, a system comprising a device, a method for dynamic orientation of the trawl bag and a control system thereof.

During a trawl operation it is essential to try to maintain as ideal a trawl geometry as possible in order to achieve optimal operation of the trawl and thereby the largest possible catch. If the trawl geometry becomes unstable or misaligned, this has a negative effect on the efficiency of the catch while at the same time leading to increased wear on seine and gear, and increasing the risk of snagging and jamming.
The opening of the trawl by means of trawl doors and weights is particularly vital for maintaining a trawl geometry that is as ideal as possible. Where trawling is conducted with a plurality of trawls alongside one another, this becomes particularly important since in this case it is even more difficult to achieve stable trawl geometry, i.e. to avoid the complete or partial collapse of one or more of the trawls.

There are several types of solutions in the prior art. One of these involves devices that project outside the gunwale for keeping the trawl bags open, another is described in NO 307541 concerning a device comprising at least three trawl bags, where the trawl bags are interconnected at common points where these common points have devices which during trawling receive a static tractive force in a direction generally away from the trawl direction as a direct result of the device's physical shape, thereby holding the trawler bags open. Other examples of static systems like this are also described in WO 86/02525, GB 1142140 and US 4 045 901. The common feature of all of these solutions is that they are statically attached to the trawl lines when the trawl is in use and the elements can only be adjusted by regulating the winding in and out from a winch on the vessel. This means that the elements are attached to the trawl lines at fixed attachment points on the elements before the trawl is deployed and can only be altered when the trawl is picked up. This severely limits the ability to control the trawl opening once the trawl has been deployed.

WO 81/03475 describes a unit that can be manned or remotely controlled and is dragged under water with devices that enable the unit's position to be adjusted vertically or horizontally. The unit is based on the combination of devices for adjusting the length of various cable sections and devices for altering the unit's geometry, thereby influencing the unit's position while the unit is moved in the water. The unit is intended for underwater surveys, etc. and is not adapted to serve as a directing module for other devices.

GB 2 122 562 discloses a wing-shaped unit in connection with a trawl where the unit's attachment points can be adjusted before use and where a screw device is provided for adjusting the unit's position during use. This device is highly inflexible, its freedom of movement being restricted by the screw mechanism.

US 3 201 889 discloses shrimp net doors with a trawl net attached thereto, and a towing cable. However, this publication does not disclose an adjusting element mounted between a line and a basic body, which element extends round a turning point and a drive unit, and which drive unit is controllable by acoustic signals from a boat or in response to readings from sensors.

International application publication no. WO 2004/086092, filed on 26 March 2004 claiming a priority date of 27 March 2003, discloses a deflector wing for carrying out seismic surveys. The wing is attached to a cable via segments and a pulley. A sensor is provided in the wing for measuring depth. However, this publication does not disclose controlling the pulley by acoustic signals and does not disclose the possibility of mounting the sensor beside the deflector wing.

The ideal trawl geometry for a trawl is dependent on a number of factors such as seabed conditions, depth, current, trawl type, towing rate, etc. Many of these parameters are not static, varying from one trawl drag to another as well as during each trawl operation. The existing solutions for maintaining the trawl geometry are essentially static with the trawl being arranged for a given situation before deployment and the only possibility of adjustment is to adjust the lines for the trawls by means of the winches on the deck of the vessel. This severely limits the possibility of adjustment.

It is desired to provide devices that enable a dynamic adjustment of the opening of the trawl to be achieved by simple means during a trawl operation. It is also desired to provide a device for dynamic adjustment of a basic element in connection with a trawl, together with a system, method and control system for use in the method, all of which have in common the ability to provide a dynamic and more active control of elements in connection with a trawling process.

In its broadest aspect, the invention is defined by claim 1. Optional features are indicated in the dependent claims.

Drive devices according to the invention may be employed for adjusting forces on lines in the system of at least one trawl. The forces can be adjusted in the horizontal and/or vertical direction, thereby achieving a wide range of adjustment possibilities for the trawl system.

The invention provides good control of the trawl bags. The degree of adjustment that can be obtained by use of the invention depends on the length of the adjusting element, the distance between turning points and the type of drive unit in the practical implementation of the invention.

The invention will now be explained in greater detail in relation to exemplary, preferred, embodiments thereof with reference to the attached drawings, in which:
Fig.1 is a schematic view of a vessel towing at least one trawl with devices according to embodiments of the invention.
Fig. 2 is a schematic view of a trawl from above.
Fig. 3 is a schematic view of a basic body with the drive device according to an embodiment of the invention.
Fig. 4 is a schematic view of a basic body with a second embodiment of the drive device.
Fig. 5 is a schematic view of a basic body with a third embodiment of the drive device.
Fig. 6 is a schematic view of two basic bodies with a fourth embodiment of the drive device.
Fig. 7 is a schematic view of a control system for use in the method according to an embodiment of the invention.

Herein is described two drive devices, an adjusting device comprising a drive device, a trawl system, a method for controlling the opening of trawls and a control system for use in the method.

The drive devices offer the capability of dynamic adjustment of a basic body in connection with one or more trawl bags during trawling. The trawls in question may, for example, be pelagic or bottom trawls. There may be several trawls arranged alongside or above one another.

The term dynamic adjustment refers to the ability to adjust the position of the basic body and the opening of the trawl bag during a trawl operation without having to bring up the trawl and alter the position of lines for the trawls and/or the attachment to the basic bodies. Dynamic adjustment offers the possibility of altering the trawl geometry as a result of dynamic variables that are altered during a trawl operation, or from one trawl operation to another trawl operation. Inputs for this dynamic regulation can be obtained by reading sensors placed on the vessel, the trawl, the lines or from some other source. Transmission of control signals to the drive unit may be carried out by means of acoustic signals, wirelessly by other means, or by physical connection of sensors to a control unit for the drive unit.

The term "basic body" should be understood to refer to any body that can be placed in connection with the trawl during a trawl operation in order to control and/or ensure the desired opening of the trawls. A basic body may be what in the art is called, for example, clumps, middle lumps, roller lumps, roller weights, doors, wings and combinations thereof, etc. A basic body will generally be specially designed to suit the use for which it is intended. A lump, for example, will be wide and low and of substantial weight in order to pull the trawl in the direction of the seabed, while a door is more likely to be narrow and high with the desired fluid flow pull in order to provide the desired lateral opening of the trawl bag. Thus the basic bodies may be designed in a shape specially adapted to their use. The drive device described herein can be employed in connection with any kind of basic body and irrespective of the shape of the basic body. The type and shape of the basic body therefore form no part of the definition of the invention and will therefore only be referred to in entirely general terms and will not be explained in more detail in this specification.

The drive device may comprise an elongated adjusting element, at least one turning point and a drive unit. The turning point is connected to and/or is composed of a portion of the basic body. The adjusting element is connected to at least one line and extends round the turning point. The line may be any kind of line in connection with a trawl, for example warp or sweep, a common line for several trawl bags, a line for a single trawl bag or a line at the trawl bag opening. The drive unit is connected with the adjusting element in order to move it relative to the basic body.

The drive units are controlled by means of a control unit, which in tum is arranged for receiving orders from the boat or from status sensors that monitor the trawl position. The control unit is adapted to process such orders/test signals and provide control signals for the drive unit.

Also provided is an adjusting device for dynamic adjustment of one or more trawl bags during a trawl operation, comprising a basic body, arranged, for example, for connection between a towline (warp) and at least one line to a point on a trawl bag (sweep). The basic body comprises at least one drive device as indicated above.

In the described drive devices and the adjusting device, the drive unit may provide a rotating and/or linear motion for movement of the adjusting element relative to the basic body. A rotating motion of the adjusting element is achieved, for example, by the drive unit rotating about a point and the adjusting element placed in abutment round the drive unit. In addition or as an alternative, the drive unit may provide a linear motion of the adjusting element relative to the basic body, for example by the drive unit preferably being progressively movable relative to the basic body. A variant may be envisaged where the drive unit is linearly movable relative to the basic body while including a rotating motion of the adjusting element. In a second variant, at least one turning point and/or drive unit may preferably be progressively movable relative to the basic body. Another variant may be envisaged where the drive unit is composed of a drum device on the basic body that winds up and pays out the adjusting element during a trawl operation.

In a variant of the device, there is comprised a closed adjusting element which extends round at least two turning points in connection with the basic body, but another variant may be envisaged where the device comprises an open adjusting element with at least one turning point to one line and one attachment point to a second line or the basic body. In some embodiments, there will be a fixed attachment point between the line and the adjusting element, while in other cases the attachment point between the line and the adjusting element will be moved along the adjusting element. It is also possible for the adjusting element to be composed of a portion of a line.

In an embodiment of the invention the drive unit is mounted in a turning point for the adjusting element. In another embodiment of the invention the drive unit is mounted in an attachment point between the adjusting element and a line. Another scenario may be for the drive device to be located on the basic body and not form a turning point for the adjusting element.

The drive unit in the devices according to the invention may be electrically, hydraulically and/or mechanically operated. The electricity may be provided by batteries, cables to the vessel and/or a separate energy-generating device, the same as for hydraulic operation of the drive unit. With regard to mechanical operation, a mechanical connection may be envisaged up to the vessel for mechanical adjustment, where, for example, a pull-out arrangement may be envisaged that is drawn back after a certain amount of pulling, devices for rotating motion by pulling on lines from one or two sides, etc.

The drive unit is preferably electrically operated.

In a preferred embodiment of the devices according to the invention they comprise an energy-generating device. Different variants may be envisaged here, one variant being a basic body including an energy-generating device, which comprises a roller device for exploiting the relative movement of the basic body in relation to the seabed, or alternatively the energy-generating device may comprise a turbine device for generating energy from the fluid flowing past.

One of the advantages of an energy-generating unit in connection with the basic body is that the trawl can be in use for a longer period, for example without having to replace batteries for operating the drive unit.

In an embodiment of the invention the adjusting element may be connected to two different basic bodies for simultaneous adjustment of two or more basic bodies. This common adjustment may be achieved by the turning point for the device being composed of the attachment point for a line and where the drive unit's engagement with the adjusting element is arranged at the same point. In this case the drive unit may be composed of an electric drive unit or a mechanical unit which may be composed of a line up to the vessel which adjusts the turning point in a linear motion relative to the basic bodies when the line is paid out/pulled in, thereby adjusting the forces acting on the basic bodies and thereby adjusting the trawl bag opening.

An embodiment of the invention also comprises a trawl system comprising two or more trawl bags during a trawl operation. In connection with at least one of the lines for the trawl bags and/or the trawl bags, the system comprises a device as indicated above for adjusting the trawl bags.

Herein disclosed is a method for controlling the opening of at least one trawl bag during trawling, where the trawl bag's basic bodies comprise at least one drive device according to that indicated above, and the trawl bag and/or basic bodies, lines or winches on the vessel etc. are equipped with at least one status sensor. A sensor reads a status, a test signal is transmitted from the sensor to a control unit, which sends a signal to the adjusting devices' drive units for adjusting the device's position as a consequence of the sensor reading. The method may comprise an interface for an operator, who can control or overrule the system. The method is performed continuously, at given intervals, or in the event of a change in the sensor reading.

Herein disclosed is a system for controlling basic bodies in connection with a trawl and/or the opening of at least one trawl bag during trawling, where the trawl bag's basic bodies comprise at least one drive device according to the invention, and the trawl bag and/or basic bodies, lines or winches on the vessel etc. comprise at least one sensor in connection with the trawling process, a control unit connected to the sensor (s) and at least one drive unit connected to the control unit, where the control unit is arranged to control the drive unit on the basis of the sensor readings.

The adjusting device for adjusting one or more basic bodies for one or more trawl bags may be employed for adjusting the basic body's location in the body of water, and it may also be employed, for example, to make a basic body go deeper down into the seabed in order to stir up mud from the seabed and thereby collect the fish in a desired area. In general it may be employed, as stated above, for adjusting the forces on the basic bodies, thus adjusting their position and thereby the opening of the trawl bags.

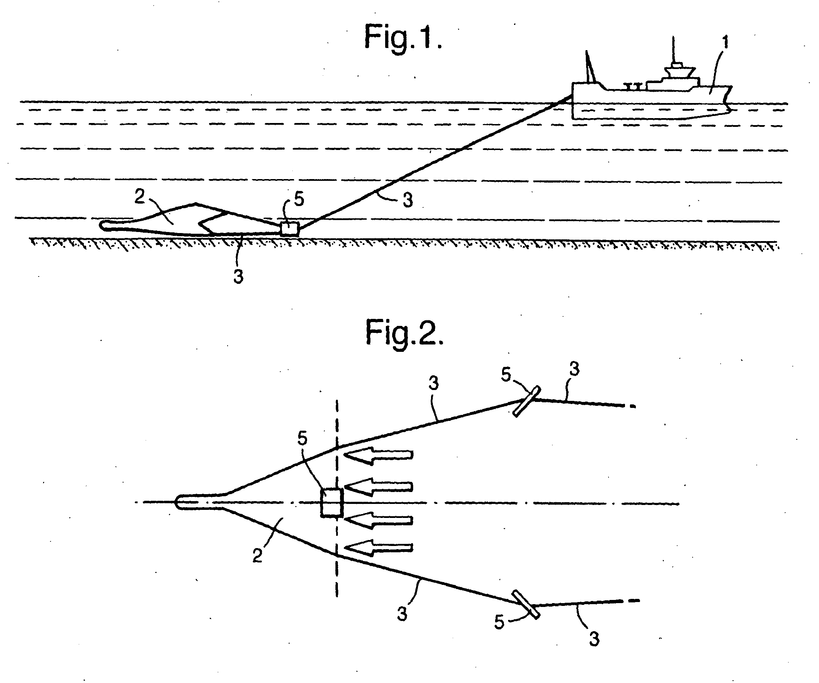

Illustrated in fig. 1 is a device for adjustment of a trawl 2 dragged by a vessel 1 in connection with a trawl operation. The trawl 2 is connected to the vessel 1 by at least one line 3. In this context the term line 3 should be understood to refer to all types of lines in connection with a trawl and trawl operation. A line 3 may be a chain or wire made of Kevlar or another type of material.

Fig. 2 is a schematic illustration of a trawl 2. In a trawl operation a plurality of trawls may be employed arranged alongside and/or above one another. The trawl 2 may be a pelagic or a bottom trawl 2. The trawl opening for the trawl is controlled and adjusted by basic bodies 5, other words for basic body being, for example, doors, weights, centre weights, roller weights, wings, etc. A basic body 5 is connected to a line 3 in connection with the trawl 2. The forces acting on the basic body and thereby also on the trawl are controlled by the drive units.

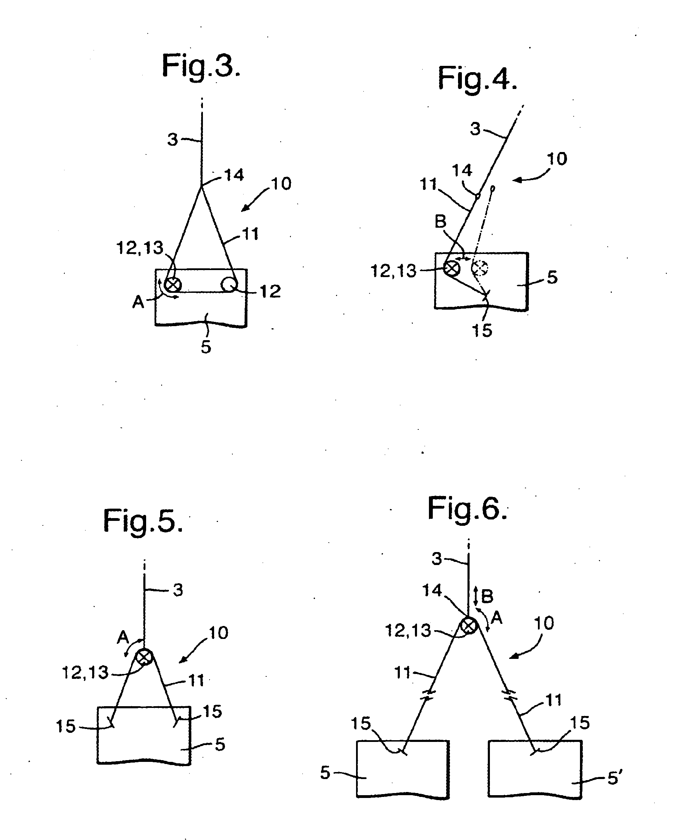

Figures 3-6 schematically illustrate four different embodiments of the drive device 10 according to the invention. The basic body 5 is illustrated in all the figures in an entirely schematic fashion. It should be understood that a basic body 5 may also be equipped with more than one drive device 10 according to the invention even though in all the figures only one drive device 10 is illustrated in connection with each basic body 5. The drive device 10 according to the invention comprises an adjusting element11, a turning point 12 and a drive unit 13. The drive device 10 constitutes a connection between a line 3 and the basic body 5.

As illustrated in fig. 3, in a first embodiment the drive device 10 may comprise a closed adjusting element 11, which extends round a turning point 12 on the basic body 5 and a drive unit 13 also mounted on the basic body 5. In this embodiment the drive unit 13 also constitutes a turning point 12. The adjusting element 11 is firmly connected to the lines 3 at an attachment point14. In this embodiment the drive unit 13 influences the adjusting element 11 with a rotating motion indicated by arrow A. By rotating the adjusting element 11 relative to the drive unit 13, the angles and resultant force on the basic body 5 will be changed, thus enabling its position and influence on the trawls to be adjusted.

Fig. 4 illustrates a second variant of the drive device 10, where the adjusting element 11 is an open adjusting element and secured to the basic body 5 at an attachment point 15. From the attachment point 15 the adjusting element 11 extends round a turning point 12, which in this case also constitutes a drive unit 13. At its other end the adjusting element 11 is secured to the line 3 at an attachment point 14. In this embodiment the adjusting element 11 may be composed of a portion of the line 3. In this embodiment it is indicated that the drive unit 13, which also constitutes the turning point 12, is linearly movable relative to the basic body 5, illustrated by arrow B. By altering the drive unit in this manner the adjusting element 11 will be moved relative to the drive unit and the resultant force on the basic body 5 is changed.

A third embodiment of the invention is illustrated in fig. 5, where the adjusting element 11 is an open element, where both ends of the adjusting element 11 are secured to the basic body 5 at attachment points 15. The adjusting element 11 extends from an attachment point 15 round a turning point 12, which also forms a drive unit 13, to the second attachment point 15 on the basic body 5. The turning point 12 and the drive unit 13 are secured to the line 3, thus providing a free and possibly progressive attachment of the adjusting element11 to the line 3. By moving the adjusting element 11 relative to the drive unit 13, the resultant force on the basic body 5 is changed, thus enabling its position to be adjusted.

In a fourth embodiment of the invention as illustrated in fig. 6, the drive device is employed for adjusting two basic bodies 5 and5'. An adjusting element 11 is connected to two basic bodies 5 and 5'at attachment points 15, at each end of the open adjusting element 11. The adjusting element extends round a turning point12, which also constitutes a drive unit 13. The turning point is connected to the line 3. In this embodiment the drive unit 13 can influence the adjusting element 11 by a rotational motion indicated by arrow A, thus causing the adjusting element 11 to change its position relative to the drive unit 13 and also, or as an alternative, by a linear motion marked by arrow B, which also causes a change in the position of the adjusting element 11 relative to the drive unit 13 by changing the adjusting element's 11 angle about the turning point 12, and changing the resultant forces on the basic bodies 5 and5'. A linear motion of this kind may be achieved by pulling or releasing the lines 3 relative to the vessel. In this manner a wide range of adjustment possibilities are achieved for the basic bodies with a drive device according to the invention.

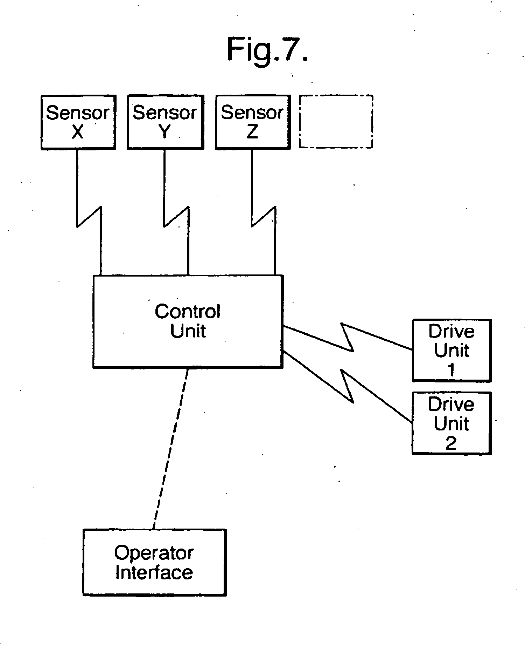

As illustrated in fig. 7, an embodiment of the invention also comprises a control system for controlling basic bodies and the opening of at least one trawl bag during trawling. The trawl bag's basic bodies comprise at least one drive device as explained above and the trawl bag and/or basic bodies, lines or winches on the vessel, etc. comprise at least one sensor. This may, for example, be a position or status sensor. A control unit is connected to the sensor(s), and at least one drive unit in a drive device is connected to the control unit, where the control unit is arranged for control of the drive unit based on the sensor readings.

The invention has now been explained by reference to four exemplary embodiments. A number of variants of these embodiments of the invention is envisaged, which fall within the scope of the invention as defined in the following claims. For example, the adjusting element may be composed of a portion of a line, where the lines are joined at an attachment point 14, as indicated in fig. 3. It is possible for the basic body to be provided with a plurality of drive devices for adjusting different lines attached to the basic body. The lines may be in connection with the towlines from the vessel. It is also possible for the lines to be only one line extending to a portion of the trawl opening and that the basic body is a so-called wing. One possible variant is to employ drive devices according to the invention for elements mounted in the trailing edge of the trawl bag. The drive unit may be envisaged composed of a drum device on the basic body. It is also possible for the drive device to comprise several drive units. A variant where there are more than two turning points is also conceivable. The position of the turning points and the attachment points relative to the basic bodies must be determined for the individual basic bodies as the position will also be dependent on the shape of the basic bodies and the hydrodynamic forces acting on the basic bodies when they are dragged through the body of water. The drive device may also be arranged in such a manner that the adjusting element is open and attached to the ends of two different lines, with turning point and drive device on the basic body.

## Claims

1. A drive device (10) for dynamic adjustment of a basic body (5) in connection with one or more trawl bags (2) during trawling, **characterised in that**:
the device comprises an elongated adjusting element (11), at least one turning point (12) and a drive unit (13), in which device the adjusting element is mounted between at least one line (3) and the basic body, and extends round the turning point and is engaged with the drive unit in order to change the adjusting element's position relative to the basic body, and that the drive unit is arranged to be controlled by acoustic signals from a boat (1) or directly in response to readings from sensors placed beside the trawl.

2. A device according to claim 1, **characterised in that** the basic body is connected between a towline (3) and the at least one line (3), and the at least one line is connected to a point on a trawl bag sweep for dynamic adjustment of the one or more trawl bags of the trawl bag sweep during a trawl operation.

3. A device according to claim 1, **characterised in that** the adjusting element is mounted between the at least one line (3), the basic body (5) and another basic body (5'), and the adjusting element is engaged in order to change the adjusting element's (11) position relative to the first-mentioned basic body and the other basic body for dynamic adjustment of the basic bodies that are in connection with said one or more trawl bags during trawling.

4. A device according to any of the preceding claims, **characterised in that** the drive unit (13) is arranged to provide rotating and/or linear motion in order to change the adjusting element's (11) position relative to the basic body (5).

5. A device according to claim 1 or 2, **characterised in that** the adjusting element is a closed adjusting element (11), which extends round another turning point (12).

6. A device according to claim 1 or 2, **characterised in that** the adjusting element is an open adjusting element (11), connected, with at least one attachment point (14), to the line (3) and connected, with another attachment point (15), to the basic body (5).

7. A device according to any of claims 1 to 5, **characterised in that** the drive unit is mounted in the turning point for the adjusting element and/or that the drive unit is mounted in an attachment point (14) between the adjusting element and the line.

8. A device according to any of claims 1 to 5, **characterised in that** there is a fixed attachment point (14) between the line (3) and the adjusting element (11).

9. A device according to any preceding claim, **characterised in that** at least one turning point and/or drive unit is progressively movable relative to the basic body.

10. A device according to claim 2, **characterised in that** it comprises further, respective drive units (13) in order to exert forces in a horizontal or vertical direction on the device for adjusting forces acting on each of the at least one lines (3) attached to the basic body.

11. A device according to any preceding claim, **characterised in that** the drive unit is electrically, hydraulically and/or mechanically operated.

12. A device according to claim 2, **characterised in that** the drive device comprises an energy-generating device.

13. A device according to claim 1 or claims 3 to 12, **characterised in that** the basic body (5) comprises an energy-generating device including a roller device for exploiting the relative movement of the basic body (5) relative to the seabed.

14. A device according to claim 12 or claim 13, **characterised in that** the energy-generating device comprises a turbine device.

15. A trawl system comprising two or more trawl bags (2) during a trawl operation, **characterised in that** it comprises a drive device (10) as indicated in claim 1 for adjusting the position of the trawl bags (2) connected with the at least one line (3).

16. A method for controlling the opening of at least one trawl bag (2) during trawling, in which the trawl bag is connected to a basic body (5) and at least one device (10) according to claim 1, 2 or 3, is mounted to the basic body, and in which the at least one trawl bag (2) and/or the basic body (5), the at least one line (3) or winches on the boat (1) are equipped with at least one status sensor, in which method a sensor reads a status, a test signal is transmitted from the sensor to a control unit, which control unit sends a signal to the at least one drive device's drive unit (13) for adjustment of the adjusting element's (11) position as a consequence of the sensor reading.

17. A method according to claim 17, **characterised in that** the control unit comprises an interface for an operator.

18. A method according to claim 17, **characterised in that** the adjustment is performed continuously, at given intervals or in the event of a change in the sensor reading.

19. A control system for controlling a basic body (5) in connection with a trawl (2) and/or the opening of at least one trawl bag (2) during trawling, in which system the basic body (5) has mounted thereon at least one drive device (10) according to claim 1, 2 or 3, and the at least one trawl bag (2) and/or basic body (5), the at least one line (3) or winches on the boat (1) comprise at least one sensor for sensing position or status, and in which system a control unit is connected to the at least one sensor and connected to the at least one drive device (10), and the control unit is arranged for control of the drive unit (13) based on the sensor readings.

## Patentansprüche

1. Antriebsvorrichtung (10) zur dynamischen Anpassung eines Grundkörpers (5) in Verbindung mit einem oder mehreren Schleppnetzbeuteln (2) während der Schleppnetzfischerei,
**dadurch gekennzeichnet, dass**:
die Vorrichtung ein längliches Anpassungselement (11), zumindest einen Wendepunkt (12) und eine Antriebseinheit (13) umfasst, wobei bei dieser Vorrichtung das Anpassungselement zwischen zumindest einer Leine (3) und dem Grundkörper angebracht ist, und sich um den Wendepunkt herum erstreckt und mit der Antriebseinheit im Eingriff ist, um die Position des Anpassungselements relativ zu dem Grundkörper zu verändern, und dass die Antriebseinheit angeordnet ist, um durch akustische Signale von einem Boot (1) oder direkt als Reaktion auf Ablesungen von Sensoren, die neben dem Schleppnetz platziert sind, gesteuert zu werden.

2. Vorrichtung nach Anspruch 1, **dadurch gekennzeichnet, dass** der Grundkörper zwischen einer Schlepptrosse (3) und der zumindest einen Leine (3) verbunden ist, und die zumindest eine Leine mit einem Punkt an einem Schleppnetzbeutel-Räumgerät verbunden ist, zur dynamischen Anpassung der einen oder mehreren Schleppnetzbeutel des Schleppnetzbeutel-Räumgeräts während eines Schleppnetzfischerei-Vorgangs.

3. Vorrichtung nach Anspruch 1, **dadurch gekennzeichnet, dass** das Anpassungselement zwischen der zumindest einen Leine (3), dem Grundkörper (5) und einem anderen Grundkörper (5') angebracht ist, und das Anpassungselement im Eingriff ist, um die Position des Anpassungselements (11) relativ zu dem zuerst erwähnten Grundkörper und dem anderen Grundkörper zu verändern, zur dynamischen Anpassung der Grundkörper, die während der Schleppnetzfischerei in Verbindung mit dem einen oder mehreren Schleppnetzbeuteln sind.

4. Vorrichtung nach einem der vorhergehenden Ansprüche, **dadurch gekennzeichnet, dass** die Antriebseinheit (13) angeordnet ist, um eine Rotationsbewegung und/oder lineare Bewegung vorzusehen, um die Position des Anpassungselements (11) relativ zu dem Grundkörper (5) zu verändern.

5. Vorrichtung nach Anspruch 1 oder 2, **dadurch gekennzeichnet, dass** das Anpassungselement ein geschlossenes Anpassungselement (11) ist, das sich um einen anderen Wendepunkt (12) herum erstreckt.

6. Vorrichtung nach Anspruch 1 oder 2, **dadurch gekennzeichnet, dass** das Anpassungselement ein offenes Anpassungselement (11) ist, das, mit zumindest einem Anbringungspunkt (14), mit der Leine (3) verbunden ist, und mit einem anderen Anbringungspunkt (15) mit dem Grundkörper (5) verbunden ist.

7. Vorrichtung nach einem der Ansprüche 1 bis 5, **dadurch gekennzeichnet, dass** die Antriebseinheit in dem Wendepunkt für das Anpassungselement angebracht ist und/oder die Antriebseinheit in einem Anbringungspunkt (14) zwischen dem Anpassungselement und der Leine angebracht ist.

8. Vorrichtung nach einem der Ansprüche 1 bis 5, **dadurch gekennzeichnet, dass** es einen festen Anbringungspunkt (14) zwischen der Leine (3) und dem Anpassungselement (11) gibt.

9. Vorrichtung nach einem der vorhergehenden Ansprüche, **dadurch gekennzeichnet, dass** der zumindest eine Wendepunkt und/oder die Antriebseinheit relativ zu dem Grundkörper progressiv bewegbar ist.

10. Vorrichtung nach Anspruch 2, **dadurch gekennzeichnet, dass** sie ferner jeweilige Antriebseinheiten (13) umfasst, um Kräfte in einer horizontalen oder vertikalen Richtung an der Vorrichtung auszuüben, zum Anpassen von Kräften, die auf jede der an den Grundkörper angebrachten zumindest einen Leine (3) wirken.

11. Vorrichtung nach einem der vorhergehenden Ansprüche, **dadurch gekennzeichnet, dass** die Antriebseinheit elektrisch, hydraulisch und/oder mechanisch betrieben wird.

12. Vorrichtung nach Anspruch 2, **dadurch gekennzeichnet, dass** die Antriebsvorrichtung eine Energieerzeugungsvorrichtung umfasst.

13. Vorrichtung nach Anspruch 1 oder einem der Ansprüche 3 bis 12, **dadurch gekennzeichnet, dass** der Grundkörper (5) eine Energieerzeugungsvorrichtung mit einer Walzenvorrichtung umfasst, zum Ausnutzen der Relativbewegung des Grundkörpers (5) relativ zu dem Meeresboden.

14. Vorrichtung nach Anspruch 12 oder 13, **dadurch gekennzeichnet, dass** die Energieerzeugungsvorrichtung eine Turbinenvorrichtung umfasst.

15. Schleppnetzsystem mit zwei oder mehreren Schleppnetzbeuteln (2) während eines Schleppnetzfischerei-Vorgangs, **dadurch gekennzeichnet, dass** es eine Antriebsvorrichtung (10) wie in Anspruch 1 angegeben umfasst, zum Anpassen der Position der Schleppnetzbeutel (2), die mit der zumindest einen Leine (3) verbunden sind.

16. Verfahren zum Steuern des Öffnens von zumindest einem Schleppnetzbeutel (2) während der Schleppnetzfischerei, wobei der Schleppnetzbeutel mit einem Grundkörper (5) und zumindest einer Vorrichtung (10) gemäß Anspruch 1, 2 oder 3 verbunden ist, an dem Grundkörper angebracht ist, und wobei der zumindest eine Schleppnetzbeutel (2) und/oder der Grundkörper (5), die zumindest eine Leine (3) oder Winden an dem Boot (1) mit zumindest einem Statussensor ausgestattet sind, wobei bei diesem Verfahren ein Sensor einen Status abliest, ein Testsignal von dem Sensor an eine Steuereinheit übertragen wird, wobei diese Steuereinheit ein Signal an die zumindest eine Antriebseinheit (13) der Antriebsvorrichtung sendet, zum Anpassen der Position des Anpassungselements (11) als eine Folge der Sensorablesung.

17. Verfahren nach Anspruch 16, **dadurch gekennzeichnet, dass** die Steuereinheit eine Schnittstelle für einen Bediener umfasst.

18. Verfahren nach Anspruch 17, **dadurch gekennzeichnet, dass** die Anpassung kontinuierlich durchgeführt wird, in bestimmten Intervallen, oder in dem Fall einer Änderung der Sensorablesung.

19. Steuersystem zum Steuern eines Grundkörpers (5) in Verbindung mit einem Schleppnetz (2) und/oder des Öffnens von zumindest einem Schleppnetzbeutel (2) während der Schleppnetzfischerei, wobei bei diesem System der Grundkörper (5) an ihm angebracht zumindest eine Antriebsvorrichtung (10) gemäß Anspruch 1, 2 oder 3 aufweist, und wobei der zumindest eine Schleppnetzbeutel (2) und/oder der Grundkörper (5), die zumindest eine Leine (3) oder Winden an dem Boot (1) zumindest einen Sensor zum Erfassen einer Position oder eines Status umfassen, und wobei bei diesem System eine Steuereinheit mit dem zumindest einen Sensor verbunden ist und mit der zumindest einen Antriebsvorrichtung (10) verbunden ist, und wobei die Steuereinheit zum Steuern der Antriebseinheit (13) basierend auf den Sensorablesungen angeordnet ist.

## Revendications

1. Dispositif d'entraînement (10) pour le réglage dynamique d'un corps de base (5) en lien avec une ou plusieurs poches de chalut (2) lors du chalutage, **caractérisé en ce que** : le dispositif comprend un élément de réglage allongé (11), au moins un point de retour (12) et une unité d'entraînement (13), dans lequel dispositif l'élément de réglage est monté entre au moins une ligne (3) et le corps de base, et s'étend autour du point de retour et est mis en prise avec l'unité d'entraînement afin de modifier la position de l'élément de réglage par rapport au corps de base, et **en ce que** l'unité d'entraînement est disposée de façon à être commandée par des signaux sonores émis par un bateau (1) ou directement en réponse aux indications des capteurs placés à côté du chalut.

2. Dispositif selon la revendication 1, **caractérisé en ce que** le corps de base est relié entre une aussière (3) et la au moins une ligne (3), et la au moins une ligne est reliée à un point sur un bras de poche de chalut pour le réglage dynamique de la ou des poches de chalut du bras de poche de chalut lors d'une opération de chalutage.

3. Dispositif selon la revendication 1, **caractérisé en ce que** l'élément de réglage est monté entre la au moins une ligne (3), le corps de base (5) et un autre corps de base (5'), et l'élément de réglage est mis en prise afin de modifier la position de l'élément de réglage (11) par rapport au premier corps de base mentionné et l'autre corps de base en vue du réglage dynamique des corps de base qui sont reliés à une ou plusieurs poches de chalut lors du chalutage.

4. Dispositif selon l'une quelconque des revendications précédentes, **caractérisé en ce que** l'unité d'entraînement (13) est disposée de façon à fournir un mouvement rotatif et/ou linéaire afin de modifier la position de l'élément de réglage (11) par rapport au corps de base (5).

5. Dispositif selon la revendication 1 ou 2,
**caractérisé en ce que** l'élément de réglage est un élément de réglage fermé (11), qui s'étend autour d'un autre point de retour (12).

6. Dispositif selon la revendication 1 ou 2,
**caractérisé en ce que** l'élément de réglage est un élément de réglage ouvert (11), relié, avec au moins un point de fixation (14), à la ligne (3) et relié, avec un autre point de fixation (15), au corps de base (5).

7. Dispositif selon l'une quelconque des revendications 1 à 5, **caractérisé en ce que** l'unité d'entraînement est montée dans le point de retour pour l'élément de réglage et/ou **en ce que** l'unité d'entraînement est montée dans un point de fixation (14) entre l'élément de réglage et la ligne.

8. Dispositif selon l'une quelconque des revendications 1 à 5, **caractérisé en ce qu'**il existe un point de fixation fixe (14) entre la ligne (3) et l'élément de réglage (11).

9. Dispositif selon l'une quelconque des revendications précédentes, **caractérisé en ce qu'**au moins un point de retour et/ou une unité d'entraînement sont déplaçables progressivement par rapport au corps de base.

10. Dispositif selon la revendication 2, **caractérisé en ce qu'**il comprend en outre des unités d'entraînement respectives (13) destinées à exercer des forces dans une direction horizontale ou verticale sur le dispositif pour régler les forces agissant sur chacune des au moins une ligne (3) fixées au corps de base.

11. Dispositif selon l'une quelconque des revendications précédentes, **caractérisé en ce que** l'unité d'entraînement est actionnée de manière électrique, hydraulique et/ou mécanique.

12. Dispositif selon la revendication 2, **caractérisé en ce que** le dispositif d'entraînement comprend un dispositif générateur d'énergie.

13. Dispositif selon la revendication 1 ou les revendications 3 à 12, **caractérisé en ce que** le corps de base (5) comprend un dispositif générateur d'énergie comprenant un dispositif formant rouleau destiné à exploiter le déplacement relatif du corps de base (5) par rapport aux fonds marins.

14. Dispositif selon la revendication 12 ou la revendication 13, **caractérisé en ce que** le dispositif générateur d'énergie comprend un dispositif formant turbine.

15. Système de chalut comprenant deux ou plusieurs poches de chalut (2) lors d'une opération de chalutage, **caractérisé en ce qu'**il comprend un dispositif d'entraînement (10) selon la revendication 1, permettant de régler la position des poches de chalut (2) reliées à la au moins une ligne (3).

16. Procédé de commande de l'ouverture d'au moins une poche de chalut (2) lors du chalutage, dans lequel la poche de chalut est reliée à un corps de base (5) et au moins un dispositif (10) selon la revendication 1, 2 ou 3, est fixé au corps de base, et dans lequel la au moins une poche de chalut (2) et/ou le corps de base (5), la au moins une ligne (3) ou des treuils sur le bateau (1) sont équipés d'au moins un capteur d'état, dans lequel procédé un capteur indique un état, un signal test est transmis par le capteur à une unité de commande, laquelle unité de commande envoie un signal à la au moins une unité d'entraînement (13) du dispositif d'entraînement pour régler la position de l'élément de réglage (11) conformément aux indications du capteur.

17. Procédé selon la revendication 16, **caractérisé en ce que** l'unité de commande comprend une interface pour un opérateur.

18. Procédé selon la revendication 17, **caractérisé en ce que** le réglage est réalisé en continu, à intervalles donnés ou en cas de modification des indications du capteur.

19. Système de commande destiné à commander un corps de base (5) en lien avec un chalut (2) et/ou l'ouverture d'au moins une poche de chalut (2) lors du chalutage, dans lequel système le corps de base (5) est pourvu d'au moins un dispositif d'entraînement (10) monté sur lui selon la revendication 1, 2 ou 3, et la au moins une poche de chalut (2) et/ou le corps de base (5), la au moins une ligne (3) ou des treuils sur le bateau (1) comprennent au moins un capteur destiné à détecter la position ou l'état, et dans lequel système une unité de commande est reliée au au moins un capteur et reliée au au moins un dispositif d'entraînement (10), et l'unité de commande est disposée de façon à commander l'unité d'entraînement (13) en fonction des indications du capteur.
